# EUROPÄISCHE PATENTSCHRIFT

(11) **EP 1 633 562 B1**
(45) Veröffentlichungstag und Bekanntmachung des Hinweises auf die Patenterteilung: **05.09.2007**
(21) Anmeldenummer: 04739674.2
(22) Anmeldetag: 08.06.2004
(51) Int. Cl.: B41F 13/004

(54) **DIREKTANTRIEB FÜR EINEN ZYLINDER EINER DRUCKMASCHINE**
DIRECT DRIVE FOR A PRINTING-PRESS CYLINDER
ENTRAINEMENT DIRECT POUR CYLINDRE D'IMPRIMANTE

(30) Priorität: 17.06.2003 DE 10327218
(43) Veröffentlichungstag der Anmeldung: 15.03.2006
(73) Patentinhaber: Schaeffler KG, 91074 Herzogenaurach (DE)
(72) Erfinder: DITTENHÖFER, Thomas, 97519 Riedbach (DE)
(86) Internationale Anmeldenummer: PCT/EP2004/006143
(87) Internationale Veröffentlichungsnummer: WO 2004/110760

(56) Entgegenhaltungen:
- EP-A- 0 693 374
- EP-A- 0 921 946
- EP-A- 1 277 575
- DE-A- 4 138 479
- US-B1- 6 247 407

## Beschreibung

### - Anwendungsgebiet der Erfindung

Die Erfindung betrifft einen elektromotorischen Direktantrieb für einen Zylinder einer Druckmaschine, der mit einem Zapfen über ein Wälzlager in einer Anschlusskonstruktion aufgenommen ist, wobei ein Rotor eines Elektromotors drehfest mit dem Zapfen und ein Stator mit der Anschlusskonstruktion verbunden ist.

### Hintergrund der Erfindung

In der Vergangenheit wurden Druckwerke von Druckmaschinen von einem Hauptantrieb angetrieben, der seine Antriebsleistung über eine mechanische Längswelle auf die Einzelaggregate einer Druckmaschine verteilt. Die Druckwerke sind durch diese mechanische Längswelle derart miteinander verbunden und gekoppelt, dass auch deren Synchronlauf zueinander möglich ist. Zu dessen Realisierung ist allerdings ein komplexes mechanisches System mit einer Vielzahl unterschiedlicher Komponenten wie z. B. Getriebe und Kupplungen notwendig. Die hieraus resultierenden Schwachpunkte wie Übertragungsfehler aufgrund von Nachgiebigkeiten mechanischer Übertragungsglieder, Spiel und Elastizitäten und zusätzliche große Trägheitsmassen beeinträchtigten jedoch das Druckbild.

Diesen Mangel hat man versucht dadurch zu beheben, dass jedem Druckwerk bzw. dessen Zylinder ein getrennter, elektromotorischer Antrieb zugeordnet ist.

Ein derartiger, auch als Direktantrieb bezeichneter separater Druckantrieb für einen Zylinder einer Druckmaschine ist aus der DE 41 38 479 C3 vorbekannt. Dieser ermöglicht es, dass für jeden Zylinder bzw. jede Walze eines Druckwerkes ein spielfreier, trägheitsarmer und mechanisch steifer Antriebsstrang aufgebaut werden kann. Die zu bewegenden Massen sind unter Ausschluss von Elastizitäten, Nachgiebigkeiten und Spiel direkt mit dem Rotor des antreibenden Elektromotors steif und fest verbunden, wobei der zugehörige Stator mit einer stationären Wandung, beispielsweise einer Druckmaschinenwand ebenfalls elastizitäts- und spielfrei verbunden ist. Wie Figur 7 dieser Vorveröffentlichung entnehmbar, ist ein Zylinder eines Druckwerkes an einer Stirnseite mit einem im Durchmesser verringerten Zapfen versehen. Dieser Zapfen ist an seinem dem Zylinder zugewandten Ende von einem Wälzlager aufgenommen. Beabstandet von diesem Wälzlager ist auf dem Zapfen ein Rotor eines Elektromotors aufgeschoben, dessen zugehöriger Stator von einer Stellwand der Druckmaschine aufgenommen ist. Bei dieser Anordnung ist von Nachteil, dass sie einen relativ hohen Montageaufwand erfordert, weil das den Zapfen aufnehmende Lager und der antreibende Elektromotor keine einbaufertige Einheit bilden.

Auch aus der EP 1 277 575 A1 ist diese Form des Direktantriebes bekannt. Wie die zugehörigen Figuren 31, 32 und 33 dieser Vorveröffentlichung belegen, ist der Zapfen eines Zylinders einer Druckmaschine über eine Lagerstelle in einem Gehäuse gehalten. An diese Lagerstelle schließt sich wiederum ein Elektromotor an, dessen Rotor auf den Zapfen aufgeschoben ist und dessen Stator von einem Gehäuse aufgenommen ist, das mit einer Gestellwand verbunden ist. Auch hier gelten die vorstehend geschilderten Nachteile, d. h., der Elektromotor des Direktantriebes und die zugehörige Lagerung des Zapfens bilden keine einbaufertige Einheit.

Die US6247407B1 zeigt einen elektromotorischen Direktantrieb von einem Zylinder einer Druckmaschine mit einer bestimmter Anordnung von Rotor und Stator.

### Zusammenfassung der Erfindung

Ausgehend von den Nachteilen des bisherigen Standes der Technik liegt der Erfindung die Aufgabe zu Grunde, einen elektromotorischen Direktantrieb für Zylinder einer Druckmaschine derart weiterzuentwickeln, dass er montagefreundlich, d. h., leicht-ttandhabbar ausgebildet ist.

Erfindungsgemäß wir diese Aufgabe nach dem kennzeichnenden Teil von Anspruch 1 in Verbindung mit dessen Oberbegriff dadurch gelöst, dass der Rotor mit einer Stirnseite eines Innenringes des Wälzlagers verbunden ist, der Stator von einem Gehäuse aufgenommen ist, das über ein Lagergehäuse an der Anschlusskonstruktion befestigt ist.

Der entscheidende Vorteil des erfindungsgemäß ausgebildeten Direktantriebes liegt darin, dass eine aus Elektromotor und Lagerung zusammenhängende unverlierbare Baueinheit gebildet ist, die der Endverbraucher lediglich in einfacher Weise durch eine Befestigung in seine Anschlusskonstruktion einbinden kann. Dies ist insbesondere von Vorteil, da durch die erfindungsgemäße Ausbildung Rotor und Stator des Elektromotors ihre Betriebsposition zueinander nicht ändern können, weil sie fest mit anderen Bestandteilen der Baueinheit verbunden sind. Dies ist von Bedeutung, da zwischen beiden aufgrund von Permanentmagneten große Kräfte auftreten können. Die anderen, an sich bekannten Vorteile eines Direktantriebes zum Antreiben eines Zylinders einer Druckmaschine bleiben erhalten. Es kann also für jeden Zylinder bzw. für jede Druckwalze ein spielfreier, trägheitsarmer und mechanisch steifer Antriebsstrang aufgebaut werden, der zusätzlich noch zu einer unverlierbaren Baueinheit zusammengehalten ist. Auf diese Weise lässt sich die Druckqualität verbessern, da die zu bewegenden Massen unter Ausschluss von Elastizitäten, Nachgiebigkeiten und Spiel direkt mit dem Rotor des antreibenden Elektromotors steif und fest verbunden sind. Auf weitere Vorteile von Direktantrieben bei Druckmaschinen braucht an dieser Stelle nicht eingegangen zu werden, da diese dem Fachmann bekannt sind und beispielsweise auch in der DE 41 38 479 C3 ausführlich dargestellt sind.

Weitere vorteilhafte Ausgestaltungen der Erfindung sind in den Unteransprüchen 2 bis 9 beschrieben.

In Weiterbildung der Erfindung ist nach Anspruch 2 vorgesehen, dass das Lagergehäuse von einer Aufnahmebohrung der Anschlusskonstruktion konzentrisch aufgenommen ist. Dies hat den Vorteil, dass somit in axialer Richtung Bauraum einsparbar ist.

Nach einem weiteren zusätzlichen Merkmal gemäß Anspruch 3 soll der Rotor in radialer Richtung nach innen eine Stirnseite des Zapfen wenigstens teilweise überdecken. Auf diese Weise ist gesichert, dass sich die aus Elektromotor und Lagerung bestehende Baueinheit in einfacher Weise am Zapfen des Zylinders befestigen lässt.

Nach einem anderen zusätzlichen Merkmal gemäß Anspruch 4 soll das Wälzlager als ein Zylinderrollenlager, ein Kegelrollenlager oder als ein Schrägkugellager ausgebildet sein.

Nach Anspruch 5 ist vorgesehen, dass eine Außenlaufbahn des Wälzlagers von einem Außenring oder vom Lagergehäuse selbst gebildet ist. Im letzteren Fall wird die Baueinheit durch ein Bestandteil verringert, so dass diese noch einfacher gestaltet ist.

Aus Anspruch 6 geht hervor, daß die Außenlaufbahn des Wälzlagers zu einer Achse der Aufnahmebohrung der Anschlußkonstruktion exzentrisch versetzt ist. Auf diese Weise ist es möglich, daß die Rotationsachse des Zylinders verstellbar ist, indem die Außenlaufbahn des Wälzlagers innerhalb der Anschlußkonstruktion exzentrisch ausgelenkt werden kann. Somit kann durch ein Drehen der kompletten Einheit der Zylinder zu einem weiteren Zylinder eingestellt bzw. positioniert werden.

In vorteilhafter Weiterbildung der Erfindung nach Anspruch 7 soll am Zylinder zur Erzielung eines Gleichlaufs mit anderen Zylindern der Druckmaschine eine Messvorrichtung zur Ermittlung von dessen Drehwinkel angeordnet sein. Im Sinne der Erfindung ist darunter eine feste direkte Verbindung zwischen Zylinder und Messvorrichtung zu verstehen, die Messfehler bisheriger Systeme, die über Kupplungselemente mit dem Zylinder verbunden sind, vermeidet.

Aus Anspruch 8 geht hervor, dass im Lagergehäuse ein Sensor angeordnet ist, der mit einem auf dem Zapfen des Zylinders angeordneten kodierten Messring in Wirkverbindung steht, wobei die ermittelten Sensorsignale zur Einstellung eines Vor- oder Nachlaufs einer Steuereinrichtung zugeführt werden.

Auf diese Weise lässt sich ein präziser Gleichlauf von mehreren Zylindern einer Druckmaschine erreichen, da Korrekturen des Vor- oder Nachlaufes von einzelnen Zylindern in einfacher Weise durch die Steuereinrichtung vorgenommen werden können. Derartige Regelsysteme in der Druckindustrie sind an sich bereits bekannt und beispielsweise in der DE 43 22 744 C2, DE 197 14 402 A1, DE 197 16 943 A1 und DE 197 54 323 A1 vorbeschrieben. Im Sinne der Erfindung liegt der Vorteil darin, dass diese an sich bekannte Regeleinrichtung zur Einstellung eines Gleichlaufes von mehreren Zylindern immanenter Bestandteil der erfindungsgemäßen Baueinheit ist.

Schließlich ist nach Anspruch 9 vorgesehen, dass der Messring ein separates Bauteil ist oder durch eine axiale Verlängerung eines Innenringes des Wälzlagers gebildet ist.

Die Erfindung wird an nachstehendem Ausführungsbeispiel näher beschrieben.

### Kurze Beschreibung der Zeichnungen

Es zeigen:
- Figur 1: einen Längsschnitt durch einen erfindungsgemäßen Direktantrieb eines Zylinders einer Druckmaschine und
- Figur 2: eine perspektivische Darstellung des Direktantriebs gemäß Figur 1, teilweise geschnitten.

### Ausführliche Beschreibung der Zeichnungen

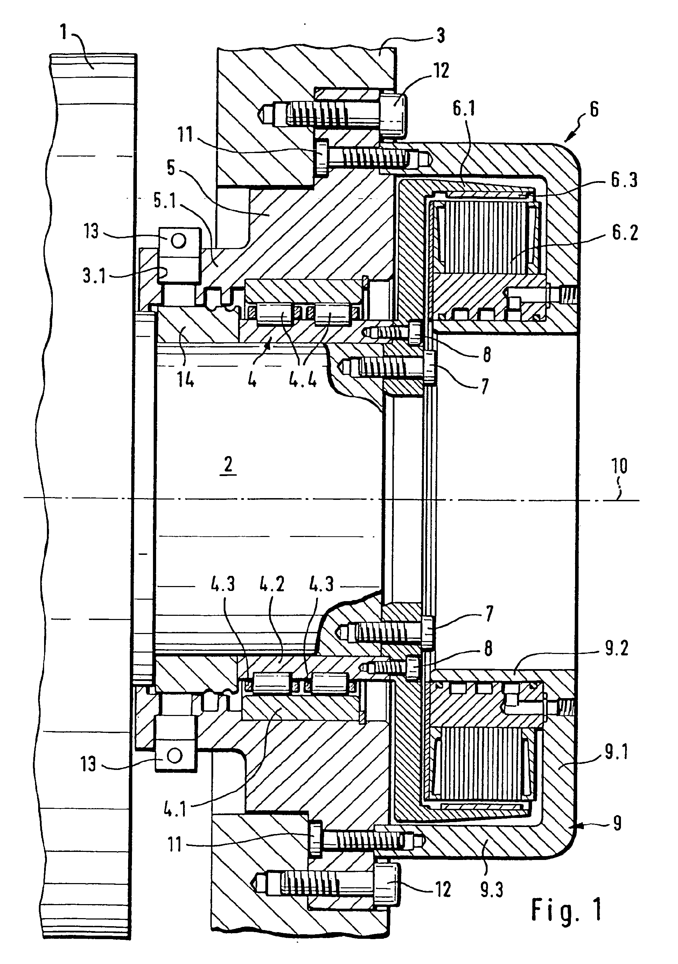

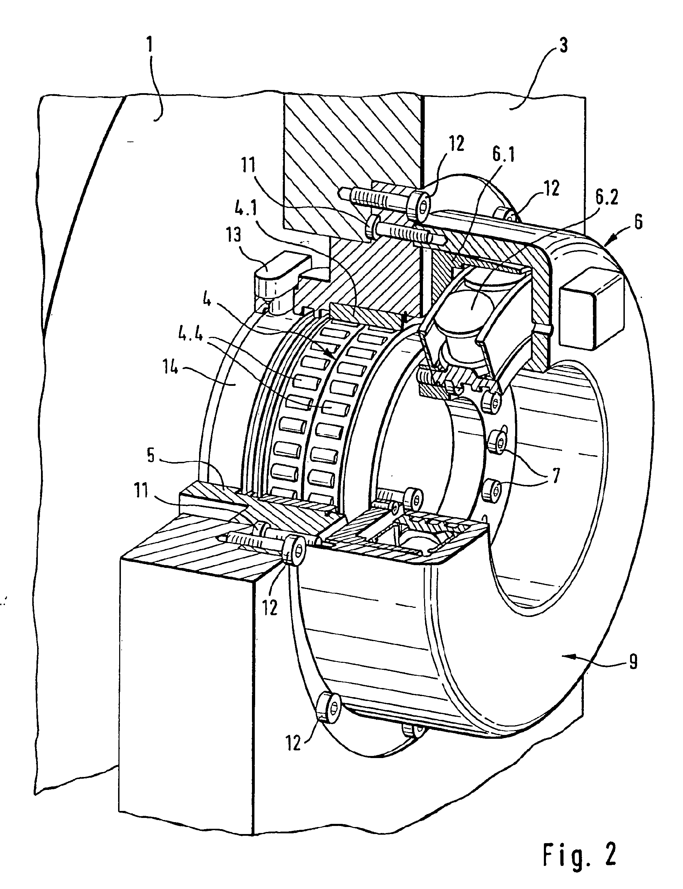

Der in den Figuren 1 und 2 dargestellte elektromotorische Direktantrieb für eine Druckmaschine zeigt einen Zylinder 1, der an einem Ende von einem im Durchmesser verringerten Zapfen 2 fortgesetzt ist. Dieser Zapfen 2 ist in einer Anschlusskonstruktion 3, beispielsweise einer Gestellwand, über ein Wälzlager 4 gehalten. Dieses ist als ein doppelreihiges, spielfrei vorgespanntes Zylinderrollen-Loslager ausgebildet und weist einen Außenring 4.1, einen Innenring 4.2 auf, zwischen denen auf zugehörigen Laufbahnen in Käfigen 4.3 geführte Zylinderrollen 4.4 abwälzen. Das Lager 4 ist konzentrisch von einem Lagergehäuse 5 aufgenommen, wobei das Lagergehäuse 5 wiederum konzentrisch von der Aufnahmebohrung 3.1 Anschlusskonstruktion 3 aufgenommen ist.

Zum Direktantrieb gehört weiter ein Elektromotor 6, dessen napfförmig ausgebildeter Rotor 6.1 in radialer Richtung die Stirnseite des Zapfens 2 teilweise überdeckt und mit Hilfe von Befestigungsschrauben 7 an dieser fixiert ist. Gleichzeitig ist der Rotor 6.1 über weitere Befestigungsschrauben 8 mit der Stirnseite des Innenringes 4.2 des Wälzlagers' 4 verbunden. Der Stator 6.2 ist von einem Gehäuse 9 aufgenommen, dessen in radialer Richtung verlaufender Boden 9.1 von einem inneren und einem äußeren in Richtung der Achse 10 verlaufenden Flansch 9.2, 9.3 fortgesetzt ist. Der Stator 6.2 ist auf eine beliebige Weise drehfest auf den inneren Flansch 9.2 des Gehäuses 9 aufgesetzt. Das Gehäuse 9 ist über Befestigungsschrauben 11 mit dem Lagergehäuse 5 verbunden, das wiederum über weitere Befestigungsschrauben 12 konzentrisch von der Anschlusskonstruktion 3 umschlossen und fest mit dieser verbunden ist. Auf diese Weise ist eine aus Wälzlager 4, Lagergehäuse 5, Rotor 6.1, Stator 6.2 und Gehäuse 9 bestehende Baueinheit gebildet, die durch die Befestigungsschrauben 8 und 11 zusammengehalten ist. Dies hat den Vorteil, dass Rotor 6.1 und Stator 6.2 ihre Lage zueinander nicht verändern können, d. h., der zwischen beiden gebildete Luftspalt 6.3 immer konstant ist. Die stabile und an die Bedürfnisse eines Druckmaschinenherstellers angepasste zusammengesetzte Baueinheit wird an diesen geliefert und braucht von diesem nur noch in einfacher Weise mit Hilfe der Befestigungsschrauben 7 und 12 in seine Konstruktion eingesetzt werden.

Wie die genannten Figuren weiter erkennen lassen, gehört zum Direktantrieb auch ein Messsystem, mit dessen Hilfe die Drehwinkel des Zylinders 1 erfasst werden können. Dieses Messsystem besteht aus einem Sensor 13, der mit einem kodierten Messring 14 in Wirkverbindung steht. Der Sensor 13 ist von einer Aufnahmebohrung einer Verlängerung 5.1 des Lagergehäuses 5 aufgenommen und in radialer Richtung beabstandet vom Messring 14 angeordnet, der im Anschluss an den Lagerinnenring 4.2 auf dem Zapfen 2 positioniert ist. Die in Umfangsrichtung gleichmäßig voneinander beabstandeten Codierungen des Messringes 14 werden vom Sensor 13 abgetastet und die Sensorsignale einer Steuereinrichtung, beispielsweise einem Mikrocomputer, zugeführt, der die entsprechenden Drehwinkel des Zylinders 1 ermittelt. Diese Drehwinkel des Zylinders 1 werden dann mit Drehwinkeln anderer Zylinder der Druckmaschine verglichen und derart korrigiert, dass die Drehzahl gleich gehalten, hoch- oder runtergefahren wird. Auf diese Weise lässt sich ein Synchronlauf mehrerer Zylinder einer Druckmaschine in einfacher Weise realisieren. Der Vorteil dieser Messanordnung liegt darin, dass sie ein immanenter Bestandteil der zusammengesetzten Direktantriebseinheit ist. Aufwändige Messanordnungen, die von außerhalb angebracht werden müssen, sind also entbehrlich. Durch die Integration der Messanordnung in die Direktantriebseinheit werden auch mögliche Fehlerquellen ausgeschlossen.

### Bezugszeichen

- 1: Zylinder
- 2: Zapfen
- 3: Anschlusskonstruktion
- 3.1: Aufnahmebohrung
- 4: Wälzlager
- 4.1: Außenring
- 4.2: Innenring
- 4.3: Käfig
- 4.4: Zylinderrolle
- 5: Lagergehäuse
- 5.1: Verlängerung
- 6: Elektromotor
- 6.1: Rotor
- 6.2: Stator
- 6.3: Luftspalt
- 7: Befestigungsschraube
- 8: Befestigungsschraube
- 9: Gehäuse
- 9.1: Boden
- 9.2: innerer Flansch
- 9.3: äußerer Flansch
- 10: Achse
- 11: Befestigungsschraube
- 12: Befestigungsschraube
- 13: Sensor
- 14: Messring

## Patentansprüche

1. Elektromotorischer Direktantrieb von einem Zylinder (1) einer Druckmaschine, der mit einem Zapfen (2) über ein Wälzlager (4) in einer Anschlusskonstruktion (3) aufgenommen ist, wobei ein Rotor (6.1) eines Elektromotors (6) drehfest mit dem Zapfen (2) und ein Stator (6.2) mit der Anschlusskonstruktion (3) verbunden ist, **dadurch gekennzeichnet, dass** der Rotor (6.1) an einer Stirnseite eines Innenringes (4.2) des Wälzlagers (4) verbunden, der Stator (6.2) von einem Gehäuse (9) aufgenommen ist, das über ein Lagergehäuse (5) an der Anschlusskonstruktion (3) verbunden ist, so dass eine aus Wälzlager (4), Lagergehäuse (5), Rotor (6.1), Stator (62) und Gehäuse (9) bestehende Baueinheit gebildet ist.

2. Direktantrieb nach Anspruch 1, **dadurch gekennzeichnet, dass** das Lagergehäuse (5) von einer Aufnahmebohrung (3.1) der Anschlusskonstruktion (3) konzentrisch aufgenommen ist.

3. Direktantrieb nach Anspruch 1, **dadurch gekennzeichnet, dass** der Rotor (6.1) in radialer Richtung nach innen eine Stirnseite des Zapfens (2) wenigstens teilweise überdeckt.

4. Direktantrieb nach Anspruch 1, **dadurch gekennzeichnet, dass** das Wälzlager (4) ein Zylinderrollenlager, ein Kegelrollenlager oder ein Schrägkugellager ist.

5. Direktantrieb nach Anspruch 1, **dadurch gekennzeichnet, dass** eine Au-βenlaufbahn des Wälzlagers (4) von einem Außenring (4.1) oder vom Lagergehäuse (5) gebildet ist.

6. Direktantrieb nach Anspruch 5, **dadurch gekennzeichnet, dass** die Außenlaufbahn des Wälzlagers (4) zu einer Achse der Aufnahmebohrung (3.1) der Anschlusskonstruktion exzentrisch versetzt ist.

7. Direktantrieb nach Anspruch 1, **dadurch gekennzeichnet, dass** am Zylinder (1) zur Erzielung eines Gleichlaufs mit anderen Zylindern der Druckmaschine eine Messvorrichtung zur Ermittlung von dessen Drehwinkel angeordnet ist.

8. Direktantrieb nach Anspruch 6, **dadurch gekennzeichnet, dass** im Lagergehäuse (5) ein Sensor (13) angeordnet ist, der mit einem auf dem Zapfen (2) des Zylinders (1) angeordneten codierten Messring (14) in Wirkverbindung steht, wobei die ermittelten Sensorsignale zur Einstellung eines Vor- oder Nachlaufs einer Steuereinrichtung zugeführt werden.

9. Direktantrieb nach Anspruch 6, **dadurch gekennzeichnet, dass** der Messring als ein separates Bauteil oder durch eine axiale Verlängerung eines Innenringes (4.2) des Wälzlagers (4) gebildet ist.

## Claims

1. Electric-motor direct drive for a cylinder (1) of a printing press, which is held with a journal (2) in a connecting structure (3) via an antifriction bearing (4), a rotor (6.1) of an electric motor (6) being firmly connected to the journal (2) so as to rotate with it, and a stator (6.2) being connected to the connecting structure (3), **characterized in that** the rotor (6.1) is connected to an end of an inner ring (4.2) of the antifriction bearing (4), the stator (6.2) is accommodated by a housing (9) which is connected to the connecting structure (3) by a bearing housing (5), so that a structural unit comprising antifriction bearing (4), bearing housing (5), rotor (6.1), stator (6.2) and housing (9) is formed.

2. Direct drive according to Claim 1, **characterized in that** the bearing housing (5) is accommodated concentrically by a receiving bore (3.1) in the connecting structure (3).

3. Direct drive according to Claim 1, **characterized in that** the rotor (6.1) at least partly covers an end of the journal (2) radially on the inside.

4. Direct drive according to Claim 1, **characterized in that** the antifriction bearing (4) is a cylindrical roller bearing, a tapered roller bearing or an inclined ball bearing.

5. Direct drive according to Claim 1, **characterized in that** an outer raceway of the antifriction bearing (4) is formed by an outer ring (4.1) or by the bearing housing (5).

6. Direct drive according to Claim 5, **characterized in that** the outer raceway of the antifriction bearing (4) is offset eccentrically in relation to an axis of the receiving bore (3.1) of the connecting structure.

7. Direct drive according to Claim 1, **characterized in that**, in order to achieve synchronism with other cylinders of the printing press, a measuring device is arranged on the cylinder (1) in order to determine the rotational angle of the latter.

8. Direct drive according to Claim 6, **characterized in that** in the bearing housing (5) there is arranged a sensor (13) which is operatively connected to a coded measuring ring (14) arranged on the journal (2) of the cylinder (1), the sensor signals determined being supplied to a control device in order to set a lead or lag.

9. Direct drive according to Claim 6, **characterized in that** the measuring ring is formed as a separate component or by an axial extension of an inner ring (4.2) of the antifriction bearing (4).

## Revendications

1. Entraînement direct par moteur électrique d'un cylindre (1) d'imprimante, qui est logé dans une structure de raccordement (3) avec un tourillon (2) par l'intermédiaire d'un palier de roulement (4), dans lequel un rotor (6.1) d'un moteur électrique (6) est solidaire du tourillon (2) et un stator (6.2) est assemblé à la structure de raccordement (3), **caractérisé en ce que** le rotor (6.1) est assemblé à une face frontale d'une bague intérieure (4.2) du palier de roulement (4), le stator (6.2) est logé dans un boîtier (9) qui est assemblé à la structure de raccordement (3) par l'intermédiaire d'un boîtier de palier (5), de façon à former une unité structurelle composée du palier de roulement (4), du boîtier de palier (5), du rotor (6.1), du stator (6.2) et du boîtier (9).

2. Entraînement direct selon la revendication 1, **caractérisé en ce que** le boîtier de palier (5) est logé concentriquement dans un alésage de réception (3.1) de la structure de raccordement (3).

3. Entraînement direct selon la revendication 1, **caractérisé en ce que** le rotor (6.1) recouvre au moins en partie, en direction radiale vers l'intérieur, une face frontale du tourillon (2).

4. Entraînement direct selon la revendication 1, **caractérisé en ce que** le palier de roulement (4) est un roulement à rouleaux cylindriques, un roulement à rouleaux coniques ou un roulement à billes oblique.

5. Entraînement direct selon la revendication 1, **caractérisé en ce qu'**une piste de roulement extérieure du palier de roulement (4) est formée par une bague extérieure (4.1) ou par le boîtier de palier (5).

6. Entraînement direct selon la revendication 5, **caractérisé en ce que** la piste de roulement extérieure du palier de roulement (4) est décalée excentriquement par rapport à un axe de l'alésage de réception (3.1) de la structure de raccordement.

7. Entraînement direct selon la revendication 1, **caractérisé en ce qu'**un dispositif de mesure pour déterminer son angle de rotation est disposé sur le cylindre (1) afin de le synchroniser avec d'autres cylindres de l'imprimante.

8. Entraînement direct selon la revendication 6, **caractérisé en ce qu'**il se trouve dans le boîtier de palier (5) un détecteur (13) qui est en liaison active avec une bague de mesure codée (14) disposée sur le tourillon (2) du cylindre (1), dans lequel les signaux de détecteur déterminés sont envoyés à un dispositif de commande pour le réglage d'une avance ou d'un retard.

9. Entraînement direct selon la revendication 6, **caractérisé en ce que** la bague de mesure est un composant séparé ou est formée par un prolongement axial d'une bague intérieure (4.2) du palier de roulement (4).
